# NEUE EUROPÄISCHE PATENTSCHRIFT

(11) **EP 2 877 755 B2**
(45) Veröffentlichungstag und Bekanntmachung des Hinweises auf die Entscheidung über den Einspruch: **06.01.2021**
(45) Hinweis auf die Patenterteilung: 20.12.2017
(21) Anmeldenummer: 13731754.1
(22) Anmeldetag: 25.06.2013
(51) Int. Cl.: F16F 15/134, F16F 15/14, F16H 45/02

(54) **ANFAHRELEMENT MIT TORSIONSSCHWINGUNGSDÄMPFER UND SCHWINGUNGSTILGER**
START-UP ELEMENT WITH TORSIONAL VIBRATION DAMPER AND VIBRATION DAMPER
ÉLÉMENT DE DÉMARRAGE COMPORTANT UN AMORTISSEUR D'OSCILLATION DE TORSION ET UN AMORTISSEUR D'OSCILLATION

(30) Priorität: 25.07.2012 DE 102012213015
(43) Veröffentlichungstag der Anmeldung: 03.06.2015
(73) Patentinhaber: ZF Friedrichshafen AG, 88046 Friedrichshafen (DE)
(72) Erfinder: MENCHER, Georg, 97506 Grafenrheinfeld (DE); HAMMER, Peter, 97421 Schweinfurt (DE); CEGAR, Stojan, 97534 Waigolshausen (DE); FAMBACH, Ralf, 97453 Schonungen (DE)
(74) Vertreter: 2SPL Patentanwälte PartG mbB
(86) Internationale Anmeldenummer: PCT/EP2013/063267
(87) Internationale Veröffentlichungsnummer: WO 2014/016071

(56) Entgegenhaltungen:
- DE-A1-102010 014 674
- DE-A1-102011 076 790
- DE-A1-102011 084 641
- JP-A- 2012 077 810
- JP-A- 2012 077 820
- US-A1- 2004 226 794
- US-A1- 2010 269 497
- US-A1- 2011 031 083
- US-A1- 2011 240 429
- US-A1- 2011 287 844
- US-A1- 2011 287 844
- US-A1- 2012 080 280
- US-A1- 2012 080 281

## Beschreibung

Ausführungsbeispiele der vorliegenden Erfindung befassen sich mit Anfahrelementen, insbesondere mit einem einen Torsionsschwingungsdämpfer und einen Schwingungstilger umfassendem Anfahrelement mit einem hydrodynamischen Kopplungselement.

Anfahrelemente zum Übertragen eines Drehmoments von einem Antriebsaggregat zu einem nachgelagerten Antriebsstrang, beispielsweise zu einem Getriebe, sind in einer Vielzahl von Ausführungen bekannt. Zum Ermöglichen eines automatischen Anfahrens werden häufig hydrodynamische Kopplungselemente verwendet, also hydrodynamische Kreisläufe ohne Drehmomentwandlung (Hydrokupplungen) oder mit Drehmomentwandlung (hydrodynamische Drehmomentwandler). Zur Steigerung der Energieeffizienz nach dem Anfahren werden diese im sogenannten Überbrückungsbetrieb von Wandlerüberbrückungskupplungen mechanisch überbrückt, um Strömungsverluste zu verhindern und den Verbrauch von Kraftstoff bzw. Antriebsenergie zu optimieren.

Kombiniert werden solche Anfahrelemente bzw. Anfahrwandler häufig mit Torsionsschwingungsdämpfern, die einstufig oder mehrstufig ausgebildet sein können, und die ein antriebsseitiges Eingangselement aufweisen, das drehfest mit einer rotierenden Antriebseinheit verbindbar ist. Zwischen diesem Eingangselement und einem abtriebsseitigen Ausgangsbauteil befinden sich ein oder mehrere Energiespeicher bzw. Federelemente, beispielsweise in Form von Spiralfedern, die dazu dienen können, Schwingungen im Antriebsstrang zu unterdrücken. Das Drehmoment wird also von dem Eingangsbauelement des Torsionsschwingungsdämpfers über die energiespeichernden bzw. schwingungsdämpfenden Elemente an das Ausgangsbauteil übertragen, welches mit dem Abtrieb des Anfahrelements drehfest verbunden ist. Allgemein soll hierin als antriebsseitige Komponente eine Komponente oder eine Baugruppe verstanden werden, die in Bezug auf den Kraftfluss vom antreibenden Aggregat hin zum Ende des Antriebsstranges näher an dem antreibenden Aggregat befindlich ist als eine als abtriebsseitig bezeichnete Komponente. Bei zweistufigen Torsionsschwingungsdämpfern wird zur Verbesserung der Dämpfungswirkung das antriebsseitige Eingangselement zunächst über eine erste Federelementanordnung mit einer sogenannte Zwischenübertragung verbunden, welche wiederum über eine zweite Federelementanordnung mit dem Ausgangsbauteil des Torsionsschwingungsdämpfers verbunden ist.

Zur weiteren Erhöhung des Fahrkomforts bzw. zur weiteren Unterdrückung von Schwingungen im Antriebsstrang, insbesondere bei überbrücktem Wandler bzw. überbrücktem hydrodynamischen Kopplungselement, werden darüber hinaus auch sogenannte Schwingungstilger verbaut. Bei Schwingungstilgern bzw. Tilgern handelt es sich, allgemein gesprochen, um Zusatzmassen, die über ein Federsystem an das Antriebssystem bzw. den Torsionsschwingungsdämpfer angekoppelt werden. Die Wirkungsweise eines Schwingungstilgers beruht dabei beispielsweise darauf, dass ein schwingungsfähiges System, das aus einer Hauptmasse und einer Zusatzmasse besteht, bezüglich seiner Eigenfrequenz so abgestimmt ist, dass bei einer bestimmten Erregerfrequenz die nachfolgend auch als Tilgergewicht bezeichnete Zusatzmasse eine erzwungene Schwingung ausführt, während die Hauptmasse in Ruhe bleibt, so dass solche Schwingungsfrequenzen effizient unterdrückt werden können.

Um die Schwingungsunterdrückung über einen größeren Drehzahlbereich zu erreichen, werden drehzahladaptive Schwingungstilger bzw. Tilger verwendet, deren Eigenfrequenz bzw. Resonanzfrequenz sich drehzahlabhängig, beispielsweise proportional zur Drehzahl, ändert. Unter einem Schwingungstilger wird hierin mithin eine Einrichtung bzw. Vorrichtung oder Anordnung von Komponenten verstanden, mittels derer kein Drehmoment übertragen wird, und die in der Lage ist, bei einer bestimmten, möglicherweise veränderlichen Schwingungsfrequenz Energie aus dem Antriebsstrang zu entnehmen, um bei dieser Frequenz auftretende Drehschwingungen zu unterdrücken.

Die Veröffentlichung US2012/0080280A1 beschreibt ein Anfahrelement mit einem hydrodynamischen Wandler, einem Schwingungstilger und einem 2- stufigen Torsionschwingungsdämpfer.

Eine große Herausforderung besteht darin, eine derartige Vielzahl von Komponenten bzw. Baugruppen in einem Anfahrelement effizient und platzsparend anzuordnen und dabei die Vielzahl der dynamisch auf die einzelnen Komponenten wirkenden Kräfte aufnehmen zu können.

Ausführungsbeispiele der vorliegenden Erfindung ermöglichen dies, indem in einem Anfahrelement, das einen zweistufigen Torsionsschwingungsdämpfer, eine hydrodynamische Kopplungseinrichtung und einen Schwingungstilger aufweist, eine bauraumgünstige und alle auftretenden Momente zuverlässig abstützende Anbindung der hydrodynamischen Kopplungseinrichtung und des Schwingungstilgers an die übrigen Komponenten, wie beispielsweise den Torsionsschwingungsdämpfer, vorgenommen wird. Der Torsionsschwingungsdämpfer weist ein antriebsseitiges Eingangselement auf, das gegen eine Wirkung einer ersten Federelementanordnung um eine Rotationsachse bezüglich einer Zwischenübertragung drehbar ist, welche wiederum gegen die Wirkung einer zweiten Federelementanordnung bezüglich einem abtriebsseitigen Ausgangsbauteil drehbar ist. Dieses ist drehfest mit einem Abtrieb des Anfahrelements gekoppelt.

Die hydrodynamische Kopplungseinrichtung, die beispielsweise ein hydrodynamischer Drehmomentwandler oder eine Hydrokupplung sein kann, weist ein Turbinenrad und einen mit diesem drehfest verbundenen Turbinenradflansch auf, welcher über eine erste mechanische Verbindung drehfest mit dem Abtrieb gekoppelt ist. Der Schwingungstilger umfasst zumindest ein Tilgergewicht, das von einem Tilgerträgerelement getragen wird, wobei das Tilgerträgerelement über eine zweite mechanische Verbindung drehfest mit der Zwischenübertragung gekoppelt ist und sich das Tilgerträgerelement entgegen einer auf der Rotationsachse senkrecht stehenden radialen Richtung bis zu einem Bauelement des Abtriebs erstreckt. D.h., das Gewicht des Schwingungstilgers wird über den Tilgerträger radial nach innen auf einem Bauelement des Abtriebs, beispielsweise einer Abtriebsnabe, abgestützt, sodass die durch die teilweise erheblichen Massen der Tilgergewichte hervorgerufenen Momente auch im Falle von kleineren Spielen der Lager in dem Anfahrelement zuverlässig abgestützt werden können, ohne zu einem erhöhten Verschleiß zu führen. Dabei überlappt sich eine axiale Ausdehnung der ersten mechanischen Verbindung mit einer axialen Ausdehnung der zweiten mechanischen Verbindung wenigstens teilweise.

Insbesondere wird gemäß den Ausführungsbeispielen der vorliegenden Erfindung zusätzlich der Turbinenradflansch mit einer anderen mechanischen Verbindung an die übrigen Elemente des Anfahrelements angebunden als der Schwingungstilger.

Dies ermöglicht es insbesondere, den Schwingungstilger mit der Zwischenübertragung des Torsionsschwingungsdämpfers zu koppeln, was hinsichtlich der Wirksamkeit des Schwingungstilgers vorteilhaft sein kann, und gleichzeitig die hydrodynamische Kopplungseinrichtung unter Umgehung des Torsionsschwingungsdämpfers mit dem Abtrieb zu koppeln, was im Wandlerbetrieb energetisch günstig sein kann. Dies kann erreicht werden, ohne dass die an dem Torsionsschwingungsdämpfer bzw. dessen Zwischenübertragung angebundenen großen Massen zu einer einen Verschleiß erhöhenden Übertragung von Kippmomenten auf den Torsionsschwingungsdämpfer führen könnten, da sich das Tilgerträgerelement radial bis zu einer Abtriebsnabe erstreckt, um sich auf diesem abzustützen. Mit anderen Worten können eventuell auftretende große Unwuchten wirkungsvoll unterdrückt werden, da sich der Schwingungstilger über die Mittelbohrung seines Tilgerträgerelements auf dem Außendurchmesser der Abtriebsnabe abstützen kann. Eine solche Unwucht könnte ansonsten prinzipbedingt auftreten, da Schwingungstilger, um eine entsprechende Tilgungswirkung zu erzielen, Tilgergewichte mit erheblichem Eigengewicht aufweisen, die bei großen Spielen bzw. Verschleiß an Lagerstellen und/oder ungünstiger Anordnung von Lagerstellen ansonsten sehr hohe Unwuchten hervorrufen könnten, die sich wiederum als ungewünschte Einflüsse im Antriebsstrang bemerkbar machen würden.

Bei Formen von Schwingungstilgern, die zwei oder mehr Tilgerträgerelemente im oben beschriebenen Sinne aufweisen, können alternativ auch mehrere bzw. alle der Tilgerträgerelemente radial nach innen bis zur Abtriebsnabe verlängert sein, um sich dort abzustützen.

Gleichzeitig kann beispielsweise durch eine radiale Staffelung der Anbindung zwischen Turbine und Abtrieb und zwischen Schwingungstilger und der Zwischenübertragung des Torsionsschwingungsdämpfers eine äußerst kompakte Bauform des Anfahrelements erreicht werden.

Dadurch kann der Schwingungstilger beispielsweise radial außerhalb des Turbinenradflansches des Turbinenrades, mittels dessen das Turbinenrad an der Abtriebsnabe befestigt ist, angeordnet werden, so dass in radialer Richtung kein zusätzlicher Bauraum benötigt wird und auch in axialer Richtung der zur Verfügung stehende Platz maximal ausgenutzt werden kann. Der von dem Turbinenradflansch in der axialen Richtung ohnehin benötigte Bauraum kann zusätzlich genutzt werden, um radial außerhalb des Turbinenradflansches den Schwingungstilger anzuordnen. Dies ermöglicht es insbesondere, den Schwingungstilger auf äußerst platzsparende Art und Weise in der zur Rotationsachse parallelen axialen Richtung zwischen dem Torsionsschwingungsdämpfer und dem Turbinenrad des hydrodynamischen Wandlers anzuordnen.

Eine besonders platzsparende Anordnung kann erreicht werden, wenn die erste mechanische Verbindung und die zweite mechanische Verbindung radial gestaffelt sind, deren Mittelpunkte sich also in unterschiedlichen radialen Abständen zur Rotationsachse befinden, und beide mechanische Verbindungen sich radial innerhalb der zweiten Federelementanordnung des Torsionsschwingungsdämpfers befinden.

In weiteren Ausführungsbeispielen der vorliegenden Erfindung umfasst die Zwischenübertragung zumindest ein antriebsseitiges Deckblech, das sich entgegen der radialen Richtung bis in einen Sicherungsbereich zwischen der Abtriebsnabe und einer zu der Abtriebsnabe entgegen der axialen Richtung benachbarten Führungsbuchse erstreckt. Dabei ist diese Lagerung spielbehaftet, d.h. in und entgegen der axialen Richtung wird eine vorbestimmte Beweglichkeit des Deckblechs relativ zu der Führungsbuchse und der Abtriebsnabe ermöglicht, wobei nach Überschreiten des konstruktiv vorgegebenen Maximalspiels die Bewegung des Deckblechs in oder entgegen der axialen Richtung innerhalb des Sicherungsbereichs entweder durch die Abtriebsnabe oder die Führungsbuchse gehemmt wird. D.h., das antriebsseitige Deckblech, das Teil der Zwischenübertragung des Torsionsschwingungsdämpfers ist, wird an einer Beweglichkeit in und entgegen der axialen Richtung gehindert, sodass axiale Kräfte auf den Torsionsschwingungsdämpfer zuverlässig abgestützt werden können.

Gemäß einem weiteren Ausführungsbeispiel weist zu diesem Zweck die Abtriebsnabe in dem Sicherungsbereich eine Anlauffläche für das Deckblech auf, die sich parallel zu demselben erstreckt und eine Lagerstelle für das antriebsseitige Deckblech bildet, sodass in dem Fall, in dem das Deckblech von der Abtriebsnabe abgestützt werden muss, nur geringer Verschleiß zwischen Deckblech und Abtriebsnabe auftreten kann.

Gemäß einigen weiteren Ausführungsbeispielen umfasst die Zwischenübertragung ferner ein abtriebsseitiges Deckblech, welches auf der dem Ausgangsbauteil axial gegenüberliegenden Seite des antriebsseitigen Deckbleches angeordnet und mit diesem in festem Abstand verbunden ist. Dabei erstreckt sich auch das abtriebsseitige Deckblech entgegen der radialen Richtung bis zu der Abtriebsnabe, um sich an dieser radial abzustützen und so eine weiter verbesserte Abstützung des Torsionsschwingungsdämpfers gegen Kippmomente zu gewährleisten.

Als Ausgangsbauteil des Torsionsschwingungsdämpfers im obigen Sinne soll hierin das abtriebsseitig letzte Bauteil des Torsionsschwingungsdämpfers verstanden werden, an welchem eine Drehmomentübergabe von dem Torsionsschwingungsdämpfer an die nachfolgenden Bauelemente erfolgt. Als eine solches Bauelement kann insbesondere auch die Abtriebsnabe verstanden werden, die allgemein auch als ein Element verstanden werden soll, an dem das Drehmoment bzw. die Rotation von dem Anfahrelement an nachgelagerte Baugruppen, beispielsweise Getriebe oder dergleichen übergeben werden kann. Typische Ausführungsbeispiele solcher Abtriebsnaben weisen eine Innenverzahnung auf, in die eine außenverzahnte Welle gesteckt werden kann, um ein Drehmoment zu übertragen.

Als hydrodynamische Kopplungseinrichtung, die in Ausführungsbeispielen eines erfindungsgemäßen Anfahrelements verwendet wird, kann dabei sowohl eine Hydrokupplung, das heißt also, ein hydrodynamischer Kreislauf ohne zusätzliche Drehmomentenwandlung als auch ein hydrodynamischer Drehmomentwandler mit einem Leitradkomplex, also ein hydrodynamischer Kreislauf mit zusätzlicher Drehmomentwandlung, eingesetzt werden.

Gemäß einigen Ausführungsbeispielen ist das Ausgangsbauteil des Torsionsschwingungsdämpfers mit dem Abtrieb über die selbe erste mechanische Verbindung gekoppelt, über die auch der Turbinenradflansch des hydrodynamischen Wandlers mit der Abtriebsnabe gekoppelt ist, was zu einer besonders kompakten Bauform beiträgt. Insbesondere können so zwei separate Niet- oder andersartige mechanische Verbindungen zwischen der Turbine und dem Torsionsschwingungsdämpfer bzw. dessen Ausgangsbauteil vermieden werden.

Gemäß einigen Ausführungsbeispielen der Erfindung überdecken sich die erste und die zweite mechanische Verbindung in der axialen Richtung zumindest teilweise. Das heißt, wenn die erste und die zweite mechanische Verbindung jeweils entweder eine Niet- oder Schraubverbindung oder eine ähnliche, sich axial erstreckende Verbindung ist, überdecken sich die axiale Ausdehnung der ersten und der zweiten mechanischen Verbindung, was zu einer besonders kompakten Bauform mit geringer axialer Ausdehnung des Anfahrelements führen kann.

Gemäß einigen Ausführungsbeispielen der vorliegenden Erfindung weist die Abtriebsnabe einen sich in der radialen Richtung erstreckenden Befestigungsflansch auf, mit dem wiederum der Turbinenradflansch des Turbinenrads über die erste mechanische Verbindung verbunden ist.

Gemäß einigen weiteren Ausführungsbeispielen der vorliegenden Erfindung befindet sich auf der dem Befestigungsflansch in der axialen Richtung gegenüberliegenden Seite des Turbinenradflansches eine Druckscheibe, die sich entgegen der radialen Richtung unmittelbar bis zu der Abtriebsnabe erstreckt, um sich an dieser abzustützen und so Kippmomente aufnehmen zu können. Dabei erstreckt sich gemäß einigen Ausführungsbeispielen der Turbinenradflansch spielbehaftet zwischen die Druckscheibe und die Abtriebsnabe, sodass nach Überschreiten eines Spiels zwischen Turbinenradflansch und Druckscheibe die Druckscheibe zu einer Entlastung der ersten mechanischen Verbindung, die beispielsweise durch Nieten ausgebildet sein kann, beiträgt, da dann die achsiale Last nicht nur von den Nieten der Vernietung sondern auch durch eine Anlage des Turbinenradflansches an die Druckscheibe aufgenommen werden kann.

Dies kann die mechanische Belastung der ersten mechanischen Verbindung, beispielsweise also auf dort verwendete Nieten, verringern, auf welche in kritischen Betriebssituationen sehr hohe Spannungen einwirken können.

Um dies zu ermöglichen weist gemäß einigen weiteren Ausführungsbeispielen die Druckscheibe auf der von dem Turbinenradflansch abgewandten Seite eine Anlagefläche für ein Axiallager auf, welche ausgebildet ist, um als Laufbahn für ein Wälzlager oder als Gleitfläche eines Gleitlagers zu dienen. D.h., die Druckscheibe selbst kann sich axial über ein Wälzlager oder ein Gleitlagers abstützen, um die die Stabilität gewährleistende Anlagefläche für den Turbinenradflansch zu bieten.

Um im Anlage an den Turbinenradflansch Nietköpfe der dort möglicherweise befindlichen Vernietung nicht zu beschädigen, weist die Druckscheibe gemäß einigen Ausführungsbeispielen der vorliegenden Erfindung auf der dem Turbinenradflansch zugewandten Seite eine umlaufende Nut oder eine Mehrzahl von Ausnehmungen zur Aufnahme von Nietköpfen auf.

Um einer weiteren Materialermüdung durch eine Relativbewegung zwischen Turbinenradflansch und Druckscheibe vorzubeugen, ist gemäß einigen Ausführungsbeispielen die Druckscheibe gegen ein Verdrehen bezüglich der Abtriebsnabe und/oder dem Turbinenradflansch gesichert. Gemäß alternativen Ausführungsbeispielen kann, mittels der Druckscheibe, der Turbinenradflansch des Turbinenrads zwischen zwei Bauteilen, nämlich der Druckscheibe und der Abtriebsnabe, eingespannt werden, was ebenfalls zu einer Verringerung der Belastung der ersten mechanischen Verbindung beitragen kann insgesamt die Betriebsdauer und Zuverlässigkeit des Anfahrelements erhöht.

Allgemein kann eine erste oder zweite mechanische Verbindung im oben beschriebenen Sinne jedwede form-, kraft- oder stoffschlüssige Verbindung sein. Formschlüssig bedeutet in diesem Zusammenhang, dass eine Verbindung, die eine Relativbewegung der miteinander verbundenen Komponenten in zumindest einer Verbindungsrichtung verhindert, dadurch bewirkt wird, dass die Geometrie der zur Verbindung verwendeten Komponenten derart gewählt wird, dass diese sich in einer Richtung senkrecht zur Verbindungsrichtung überschneiden, um derart die Bewegung in der Verbindungsrichtung zu verhindern. Kraftschlüssig bedeutet in diesem Zusammenhang, dass eine Verbindung, die eine Relativbewegung der miteinander verbundenen Komponenten in zumindest einer Richtung verhindert, durch eine zwischen den Komponenten senkrecht zur Verbindungsrichtung wirkende Kraft, die beispielsweise zu erhöhten Kohäsions- oder Adhäsionskräften führt, bewirkt wird. Ein Kraftschluss liegt somit so lange vor, wie eine durch die Haftreibung bewirkt Kraft zwischen den Komponenten nicht überschritten wird. Stoffschlüssig bedeutet in diesem Zusammenhang, dass eine Verbindung, die eine Relativbewegung der miteinander verbundenen Komponenten in zumindest einer Richtung verhindert, über atomare oder molekulare Kräfte vermittelt wird. Dabei kann zumindest teilweise eine Vermischung der Materialen der verbundenen Komponenten an einer Grenzfläche erfolgen. Diese muss nicht ausschließlich zwischen den Materialen der verbundenen Komponenten allein erfolgen. Vielmehr kann zusätzlich eine die Vermischung bewirkende oder unterstützende Materialkomponente, beispielsweise in Form eines Klebstoffes oder eines Materials eines Schweißdrahtes vorhanden sein, sodass an der Grenzfläche eine Mehrzahl von Materialen im mikroskopischen Maßstab miteinander vermischt sind.

Bevorzugte Ausführungsbeispiele der vorliegenden Erfindung werden nachfolgend, bezugnehmend auf die beigefügten Figuren, näher erläutert. Es zeigen:
Fig. 1 einen Schnitt durch eine Hälfte eines Anfahrelements gemäß einem Ausführungsbeispiel der vorliegenden Erfindung;
Fig. 2 einen Schnitt durch eine Hälfte eines weiteren Anfahrelements gemäß einem Ausführungsbeispiel der vorliegenden Erfindung; und
Fig. 3 eine Ansicht einer Druckscheibe zur Verwendung in einem der Ausführungsbeispiele der Fig. 1 und 2.

Beispielhafte Ausführungsbeispiele werden nun in Bezugnahme auf die beigefügten Figuren beschrieben. Dabei wird vorab darauf hingewiesen, dass die Figuren nicht notwendigerweise maßstabsgetreu gezeichnet sind und dass, um gewisse Merkmale oder Eigenschaften hervorzuheben, bestimmte Komponenten durch Verwendung einer anderen Strichstärke oder Schraffur künstlich hervorgehoben sein können.

Es wird explizit darauf hingewiesen, dass weitere Ausführungsbeispiele durch die in den nachfolgenden Figuren gezeigten speziellen Implementierungen nicht eingeschränkt werden sollen. Insbesondere soll die Tatsache, dass bestimmte Funktionalitäten in den folgenden Figuren bezüglich spezieller Entitäten, spezifischer Funktionsblöcke oder spezifischer Vorrichtungen beschrieben werden, nicht so ausgelegt werden, dass diese Funktionalitäten in weiteren Ausführungsbeispielen auf dieselbe Art und Weise verteilt sein sollen oder gar müssen. In weiteren Ausführungsbeispielen mögen bestimmte, nachfolgend getrennten Bauteilen oder Einheiten zugeordnete Funktionalitäten in einem einzigen Bauteil bzw. in einem einzigen funktionalen Element zusammengefasst sein oder hierin als in einem einzigen Element vereinte Funktionalitäten können in getrennten funktionalen Einheiten oder durch mehrere separate Bauteile ausgeführt werden.

Ferner wird darauf hingewiesen, dass, wenn ein spezielles Element oder Bauteil als mit einem anderen Element verbunden, mit diesem gekoppelt oder an dieses angebunden bezeichnet wird, damit nicht notwendigerweise gemeint ist, dass dieses unmittelbar und direkt mit dem anderen Bauteil verbunden, gekoppelt oder an dieses angebunden sein soll. Sofern dies gemeint ist, wird darauf explizit hingewiesen, indem beschrieben ist, dass das Element mit dem weiteren Element direkt verbunden, direkt gekoppelt oder direkt an dieses angebunden ist. Dies bedeutet, dass keine dazwischenliegenden, eine indirekte Kopplung bzw. Verbindung oder Anbindung vermittelnden weiteren Elemente vorhanden sind. Darüber hinaus bezeichnen in den nachfolgenden Figuren identische Bezugszeichen identische, funktionsidentische oder funktionsähnliche Komponenten, die also zwischen den unterschiedlichen nachfolgend beschriebenen exemplarischen Ausführungsbeispielen einander substituierend ausgetauscht werden können. Daher kann auch zur detaillierten Beschreibung eines solchen Bauteils, das in einer Figur dargestellt ist, auf die Beschreibung des dazu korrespondierenden Bauteils bzw. Bauelements in einer anderen Figur zurückgegriffen werden.

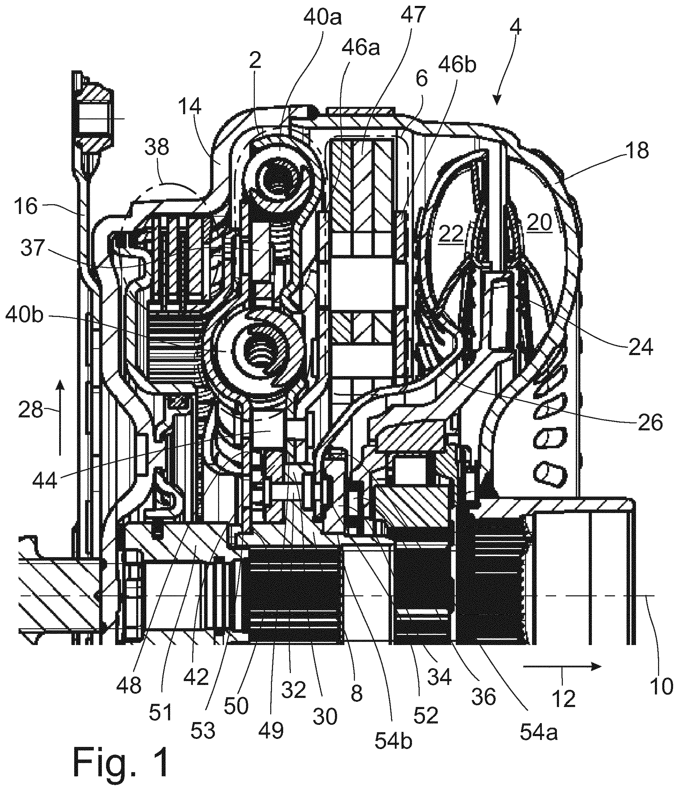

Fig. 1 zeigt ein Ausführungsbeispiel eines Anfahrelements, das einen Torsionsschwingungsdämpfer 2, einen hydrodynamischen Anfahrwandler als hydrodynamische Kopplungseinrichtung 4 und einen Schwingungstilger 6 umfasst. Eine einen Abtrieb des Anfahrelements bildende Abtriebsnabe 8 weist eine Innenverzahnung auf, in die beispielsweise eine Eingangswelle eines Getriebes eingepasst werden kann, um ein von dem Anfahrelement übertragenes Drehmoment bzw. eine Rotation an eine Abtriebsseite weiterzugeben.

Während des Betriebs rotiert die Abtriebsnabe 8 um eine Rotationsachse 10, entlang derer sich in einer zur Rotationsachse 10 parallelen axialen Richtung 12 das im Wesentlichen rotationssymmetrische Anfahrelement erstreckt. Die Anbindung an einen Antrieb erfolgt über eine antriebsseitige Gehäusehälfte, den Wandlerdeckel 14, der über flexible Platten 16 mit einer hier der Einfachheit halber nicht dargestellten Antriebseinheit, beispielsweise einem Verbrennungs- oder Elektromotor, verbunden wird. Der motorseitige Wandlerdeckel 14 ist mit einem getriebeseitigen bzw. abtriebsseitigen Gehäuseteil, der Pumpenschale 18 verschweißt, die an ihrem axialen Ende als Teil des hydrodynamischen Wandlerkreises Pumpenradschaufeln 20 aufweist, mittels derer eine hydraulisch aktive Flüssigkeit in Richtung von Turbinenradschaufeln 22 des hydrodynamischen Wandlers gefördert wird, wenn das Gehäuse über die flexiblen Platten 16 in Rotation versetzt wird.

Im vorliegenden Fall handelt es sich bei dem hydrodynamischen Wandler 4 um einen hydrodynamischen Drehmomentwandler, weshalb dieser ferner einen Leitapparat 24 aufweist, mittels dessen der hydraulische Kreislauf zwischen den Pumpenradschaufeln 20 und den Turbinenradschaufeln 22 geschlossen wird. Zum Übertragen der Rotation der Turbinenradschaufeln 22 ist das Turbinenrad über einen Turbinenradflansch 26 drehfest mit der Abtriebsnabe 8 verbunden. Genauer gesagt weist die Abtriebsnabe 8 einen sich von ihr in einer zur axialen Richtung 12 senkrechten radialen Richtung 28 erstreckenden Befestigungsflansch 30 auf, der mit dem Turbinenradflansch 26 des Turbinenrads über eine erste mechanische Verbindung 32 in Form von Nieten drehfest verbunden ist.

Zur Verbesserung der Stabilität der Verbindung ist auf der dem Befestigungsflansch 30 in der axialen Richtung 12 gegenüberliegenden Seite des Turbinenradflansches 26 eine ringförmige Druckscheibe 34 angeordnet, die sich entgegen der radialen Richtung 28 bis zur Abtriebsnabe 8 erstreckt um sich an der Abtriebsnabe 8 abzustützen. Zusätzlich wird dadurch die Druckscheibe radial zentriert und fixiert.

Eine Abstützung an der Abtriebsnabe 8 erlaubt es, mittels der Druckscheibe Kippmomente relativ zur axialen Richtung 12 zuverlässig aufzunehmen. Der Turbinenradflansch 26 ist mit der Abtriebsnabe 8 vernietet und erstreckt sich bezüglich der Druckscheibe 34 spielbehaftet radial nach innen. D.h., ein Spiel zwischen der Druckscheibe 34 und dem Turbinenradflansch 26 ermöglicht einen geringen Ausgleich eines axialen Spiels zwischen diesen beiden Elementen. Nach Ausgleich des Spiels kann der Turbinenradflansch 26 jedoch in Anlage zu der Druckscheibe 34 gelangen, um eine Überdehnung der Nieten 32 und somit einen überlastbedingten Ausfall des Antriebselements zu verhindern, indem die Stabilität der Verbindung zwischen dem Turbinenradflansch 26 und dem Befestigungsflansch 30 der Abtriebsnabe 8 erhöht wird. Um trotz der spielbehafteten Anordnung der Druckscheibe 34 bezüglich dem Turbinenradflansch 26 eine Verstärkung der Anbindung des Turbinenradflansches 26 an die Abtriebsnabe 8 zu gewährleisten, ist die Druckscheibe 34 selbst auf der von dem Turbinenradflansch 26 abgewandten Seite mittels Wälzlagers 36 axial abgestützt.

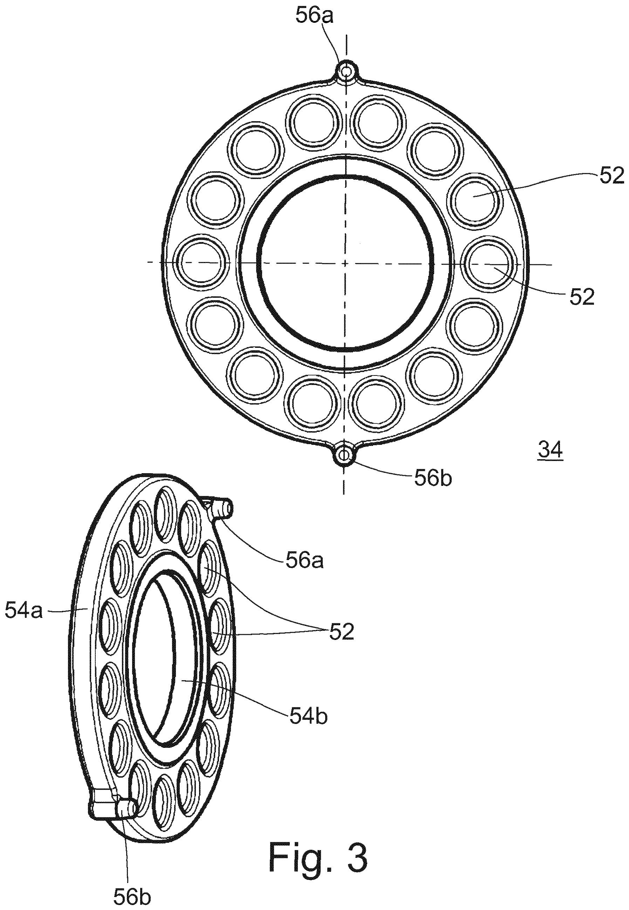

Die in Fig. 3 detaillierter dargestellte Druckscheibe 34 kann also die Vernietung von Turbinenradflansch 26 und Abtriebsnabe 8 stabilisieren, die im Hinblick auf auftretenden Verschleiß besonders kritisch sein kann. Insbesondere können an den Nieten 32 in kritischen Betriebssituationen hohe Zugspannungen auftreten, die zum Ausfall der Verbindung führen könnten. Durch ein axiales Abstützen der Turbine in der axialen Richtung 12 mittels der Druckscheibe 34, kann die Belastung der Vernietung signifikant reduziert werden, was die Betriebsfestigkeit bzw. die Zuverlässigkeit erhöht.

Die Rückseite der Druckscheibe 34, das heißt die von dem Turbinenradflansch 26 abgewandte Seite der Druckscheibe 34 ist bei dem in Fig. 1 gezeigten Ausführungsbeispiel als Laufbahn für das Wälzlager 36 ausgebildet, mittels dessen sich die Druckscheibe 34 an der Nabe des Leitapparats 24 in der axialen Richtung 12 abstützt, so dass über das Wälzlager 36 und über die Druckscheibe 34 entgegen der axialen Richtung eine die Nieten 32 unterstützende Kraft auf den Turbinenradflansch 26 ausgeübt werden kann. Bei alternativen Ausführungsbeispielen kann anstelle des Axiallagers bzw. des Wälzlagers 36 auch ein Gleitlager verwendet werden. Im Falle der Verwendung von Wälzlagern kommen selbstverständlich jedwede Lagertypen in Betracht, beispielsweise Kegelrollenlager, Zylinderrollenlager, Tonnenrollenlager, Axialnagellager, wobei die einzelnen Wälzkörper entweder aus Stahl oder auch aus einem resistenten Kunststoff ausgeführt sein können. Insbesondere kann auch im Falle eines Gleitlagers die Druckscheibe 34 aus einem Kunststoff gefertigt sein. Zur Verbesserung des Ölflusses bzw. zum Vorbeiführen des Ölflusses an einem Gleit- oder Wälzlager 36 kann die Druckscheibe an ihrem axialen Ende beispielsweise auch Nuten oder Ausnehmungen zum Führen bzw. Kanalisieren von Öl aufweisen. Auf weitere Details der Druckscheibe 34 wird nachfolgend, in Bezugnahme auf Fig. 3, näher eingegangen werden.

Während des Anfahrens mittels des Anfahrelements von Fig. 1 wird der Kraftschluss zur Abtriebsnabe 8 über die Pumpenradschaufeln 20, die Turbinenradschaufeln 22 und den Turbinenradflansch 26 des Turbinenrads hergestellt. Nach dem Anfahren wird die in Fig. 1 dargestellte Wandlerüberbrückungskupplung 38 hydraulisch aktiviert, die einen Kraftschluss zwischen dem angetriebenen Wandlerdeckel 14 und einem Eingangselement 37 des Torsionsschwingungsdämpfers 2 herstellt.

Das Eingangselement 37 ist vorliegend scheibenförmig ausgebildet und befindet sich zwischen einem antriebsseitigen Deckblech 48 und einem abtriebsseitigen Deckblech 49, die zusammen eine Zwischenübertragung des Torsionsschwingungsdämpfers 2 bilden. Bei dem zweistufigen Torsionsschwingungsdämpfer 2 ist das antriebsseitige Eingangselement 37 gegen die Wirkung einer ersten ein Federelement 40a umfassenden Federelementanordnung um die Rotationsachse 10 bezüglich der Zwischenübertragung drehbar. Ein scheibenförmiges Ausgangsbauteil 42 des Torsionsschwingungsdämpfers 2 ist wiederrum entgegen der Wirkung einer zweiten, das zweite Federelement 40b umfassenden, Federelementanordnung bezüglich der Zwischenübertragung drehbar. Das Ausgangsbauteil 42 ist mittels der ersten mechanischen Verbindung 32 in Form einer Vernietung mit der Abtriebsnabe 8 vernietet und somit drehfest mit dieser verbunden.

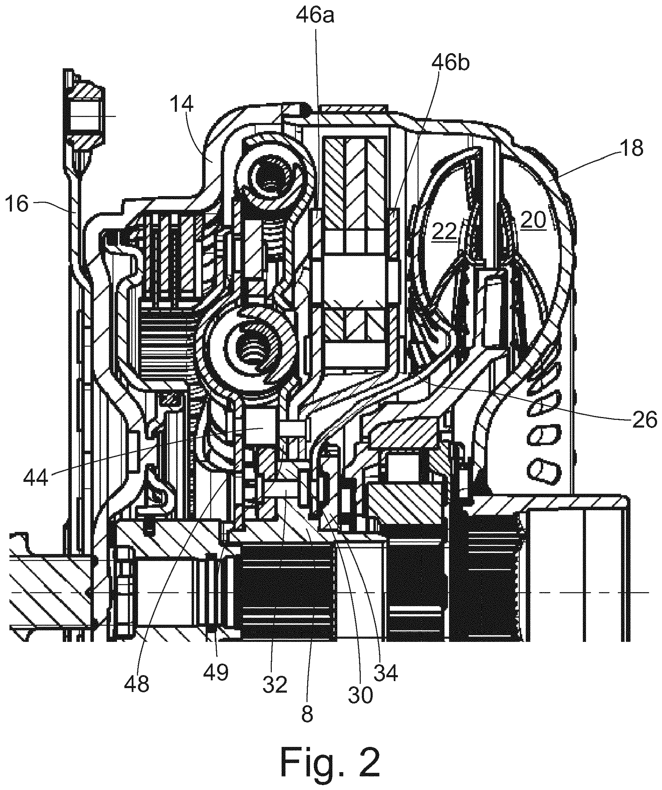

Um die im Antriebsstrang auftretenden Drehungleichförmigkeiten im Wandlerüberbrückungsbetrieb noch effizienter zu bedämpfen, ist ein Tilgerträgerelement 46a eines Schwingungstilgers, der zumindest ein bezüglich dem Tilgerträgerelement 46a bewegliches Tilgergewicht 47 aufweist, mittels einer zweiten mechanischen Verbindung 44 in Form einer weiteren Vernietung drehfest mit der Zwischenübertragung 48, 49 gekoppelt. Dabei erstreckt sich das Tilgerträgerelement 46a entgegen der radialen Richtung bis zu der Abtriebsnabe 8 und stützt sich radial auf dieser ab. Dies ermöglicht es, den Schwingungstilger 6 auf für die Drehschwingungskompensation besonders vorteilhafter Art und Weise mit der Zwischenübertragung zu koppeln und gleichzeitig dafür Sorge zu tragen, dass die möglicherweise durch die hohen Massen der Tilgergewichte 47 in das System eingebrachten Kippmomente zuverlässig abgestützt werden können. Ein axial zu dem ersten Tilgerträgerelement 46a benachbartes zweites Tilgerträgerelement 46b, das auf der dem ersten Tilgerträgerelement 46a abgewandten Seite der Tilgergewichte 47 der Führung derselben dient, ist bei dem in Fig. 1 dargestellten Ausführungsbeispiel radial nach innen nicht angebunden. Alternativ dazu kann, wie beispielsweise bei dem in Fig. 2 gezeigten Ausführungsbeispiel, das zweite Tilgerträgerelement 46b radial ebenfalls soweit nach innen geführt werden, dass sich dieses unmittelbar an der Abtriebsnabe 8 abstützt. Dabei können auf vorteilhafte Art und Weise beide Tilgerträgerelemente 46a und 46b mittels der zweiten mechanischen Verbindung 44 mit der Zwischenübertragung verbunden werden. D.h., bei den in Fig. 1 und 2 gezeigten Ausführungsbeispielen sind das bzw. die Tilgerträgerelemente 46a oder 46b über ihre Mittelbohrungen auf dem Außendurchmesser der Abtriebsnabe 8 gelagert, was, auch bei der Verwendung von großen Tilgergewichten 47, bei ungünstiger Anordnung von weiteren Lagerstellen bzw. bei Spiel in den verwendeten Lagern Unwuchten verhindern kann. Alternativ ist aber auch denkbar, anstatt des Tilgerträgerelementes 46a gemäß Fig. 1 oder aber der Tilgerträgerelemente 46a und 46b gemäß Fig. 2 das abtriebsseitige Deckblech 49 der Zwischenübertragung 48, 49 auf dem Außendurchmesser der Abtriebsnabe 8 zu lagern. Bei einer derartigen Ausführung ist die Mittelbohrung des Tilgerträgerelementes 46a sowie gegebenenfalls die Mittelbohrung des Tilgerträgerelementes 46b mit größerem Innendurchmesser auszubilden als der Außendurchmesser der Abtriebsnabe 8.

Da bis auf den soeben beschriebenen Unterschied die in dem in Fig. 2 gezeigten Ausführungsbeispiel verwendeten Komponenten denjenigen des in Fig. 1 gezeigten Ausführungsbeispiels entsprechen, wird bezüglich einer detaillierteren Beschreibung des in Fig. 2 gezeigten Ausführungsbeispiels auf die Beschreibung der jeweiligen Komponenten des Ausführungsbeispiels von Fig. 1 verwiesen.

Wenngleich in Fig. 1 ein zweistufiger Torsionsschwingungsdämpfer 2 dargestellt ist, versteht es sich von selbst, dass bei alternativen Ausführungsformen auch mehrstufige Torsionsschwingungsdämpfer verwendet werden können.

Bei dem in Fig. 1 dargestellten Ausführungsbeispiel ist der Schwingungstilger 6 über ein sich von radial außen nach radial innen bis zur Abtriebsnabe 8 erstreckendes Tilgerträgerelement 46a mit dem Torsionsschwingungsdämpfer 2 vernietet. Das heißt, die erste und die zweite mechanische Verbindung 32 und 44 sind bei dem in Fig. 1 gezeigten Ausführungsbeispiel jeweils als Vernietungen ausgeführt. Bei alternativen Ausführungsbeispielen kann jede Verbindung selbstverständlich über jedwede andere Art der mechanischen Befestigung erfolgen.

Durch die bei dem in Fig. 1 dargestellten Ausführungsbeispiel verwirklichte radiale Staffelung der ersten und der zweiten mechanischen Verbindung 42 bzw. 44, die sich zudem beide radial innerhalb des zweiten Federelements 40b der zweiten Federelementanordnung befinden, wird eine besonders kompakte und dennoch robuste und sämtlichen eingeleiteten Momenten gerecht werdende Konstruktion ermöglicht.

Bei der in den Fig. 1 gezeigten Ausführungsform stützt sich auch der Torsionsschwingungsdämpfer 2, der über die zweite mechanische Verbindung 44 mit den Tilgerträgerelement 46a gekoppelt ist, über das Tilgerträgerelement 46a in der radialen Richtung 28 nach innen auf der Abtriebsnabe 8 ab. Dies kann bei dem in Figur 1 gezeigten Ausführungsbeispiel, bei dem die axiale Ausdehnung des Tilgerträgerelementes 46a größer ist als diejenige eines abtriebsseitigen Deckbleches 49 des Torsionsschwingungsdämpfers 2, zu einer verschleißarmen radialen Abstützung des Torsionsschwingungsdämpfers 2 mit einer geringen Flächenpressung beitragen. Da die Tilgergewichte 47 und das Tilgerträgerelement 46a eine funktionsbedingt große Masse aufweisen können, ist eine wirksame Abstützung des Schwingungstilgers 6 sowohl in axialer Richtung 12 als auch in radialer Richtung 28 im Allgemeinen wünschenswert, wenn dieser an der Zwischenübertragung angebracht ist.

Bei dem in Figur 1 gezeigten Ausführungsbeispiel erstreckt sich auch ein antriebsseitiges Deckblech 48 des Torsionsschwingungsdämpfers 2 entgegen der radialen Richtung 28 nach innen bis zu der Abtriebsnabe 8, um sich dort zusätzlich radial abzustützen. Durch diese Anordnung entsteht eine in der axialen Richtung 12 von der Abstützung des Tilgerträgerelementes 46a mit einem großen Stützabstand beabstandete weitere radiale Abstützung. Die voneinander beabstandeten radialen Abstützungen können ein Verkippen des Schwingungstilgers 6 bezüglich der Abtriebsnabe 8 wirkungsvoll verhindern, auch wenn, wie in Figur 1 dargestellt, die relativ zu dem Tilgerträgerelement 46a radial beweglichen Tilgergewichte 47 axial bezüglich der radialen Abstützung des Tilgerträgerelementes 46a versetzt sind.

Zusätzlich ermöglicht es die vorteilhafte Form des sich radial nach innen erstreckenden antriebsseitigen Deckblechs 48, den Torsionsschwingungsdämpfer 2 auch in und entgegen der axialen Richtung 12 abzustützen. Die Abtriebsnabe 8 bildet zusammen mit einer sich entgegen der axialen Richtung 12 an die Abtriebsnabe 8 anschließenden Führungsbuchse 51 einen Sicherungsbereich 53, in den sich das antriebsseitige Deckblech 48 erstreckt. D.h., die Abtriebsnabe 8 und die Führungsbuchse 51 definieren einen Bereich, innerhalb dessen sich das antriebsseitige Deckblech 48 in der axialen Richtung innerhalb eines definierten Spiels bewegen kann, und durch den somit die maximale Beweglichkeit des antriebsseitigen Deckbleches 48 in- und entgegen der axialen Richtung gehemmt wird. Um bei einer axialen Abstützung des antriebsseitigen Deckbleches 48 an der Abtriebsnabe 8 einen übermäßigen Verschleiß zu verhindern, ist an der Abtriebsnabe 8 eine Lagerstelle für das antriebsseitige Deckblech 48 in Form einer sich parallel zu diesem erstreckenden Anlauffläche 50 gebildet.

Dies kann dazu dienen, die aufgrund von eingeleiteten Axialkräften auf die Deckbleche 48 oder 49 des Torsionsschwingungsdämpfers 2 hervorgerufenen Bestrebungen, dass sich der Torsionsschwingungsdämpfer 2 in der axialen Richtung 12 verschiebt, zu verhindern. Dies wiederum kann dazu führen, dass der Torsionsschwingungsdämpfer 2 höheren Belastungen in Form von Reibung, Verformungen usw. standhalten kann und dass eine funktionale Einschränkung aufgrund von axialen Verschiebungen auf angrenzende Bauteile, wie beispielsweise die Wandlerüberbrückungskupplung 38 vermieden werden kann, so dass insgesamt die Betriebsfähigkeit für einen längeren Zeitraum störungsfrei aufrecht erhalten werden kann.

Bei dem in Figur 2 gezeigten Ausführungsbeispiel mit einem Schwingungstilger 6 mit zwei axial beabstandeten Tilgerträgerelementen 46a und 46b erstrecken sich beide Tilgerträgerelemente 46a und 46b entgegen der radialen Richtung 28 nach innen bis zu der Abtriebsnabe 8, um sich dort radial abzustützen. Dies vergrößert die axiale Ausdehnung desjenigen Bereichs, an dem die Massen des Schwingungstilgers 6 sowie des Torsionsschwingungsdämpfers 2 radial auf der Abtriebsnabe abgestützt sind, was ein Verkippen des Schwingungstilgers 6 bezüglich der Abtriebsnabe verhindern kann, ohne dass eine Flächenpressung in diesem Bereich zu einem übermäßigen Verschleiß führen könnte. Bei einigen Ausführungsbeispielen kann daher auf eine weitere radiale Abstützung eines anderen Bauteils des Schwingungstilgers 6 oder des Torsionsschwingungsdämpfers 2 verzichtet werden.

Bei alternativen Ausführungsbeispielen ist es selbstverständlich ebenfalls möglich, dass sich auch weitere Teile des Torsionsschwingungsdämpfers 2 selbst radial auf der Abtriebsnabe 8 abstützen. Das heißt, bei einer solchen Ausführungsform könnte sich ein weiteres Bauteil, also beispielsweise das abtriebsseitige Deckblech 49, das Ausgangsbauteil 42 oder ein weiteres Zwischenblech zwischen den elastischen Elementen 40a und 40b in der radialen Richtung nach innen bis zur Oberfläche der Abtriebsnabe 8 erstrecken, um eine Abstützung zu erzielen.

Bei dem in Fig. 1 gezeigten Ausführungsbeispiel wird also die Bewegung des Torsionsschwingungsdämpfers 2 in der axialen Richtung 12 durch die Anlauffläche 50 an der Abtriebsnabe 8 gehemmt, wohingegen die Bewegung entgegen der axialen Richtung 12 über eine mit der Abtriebsnabe 8 drehfest verbundene Führungsbuchse 51 bzw. über die Deckelnabe eingeschränkt bzw. gehemmt wird. Bei einigen Ausführungsbeispielen ist die Lagerung zwischen den Anlaufflächen 50 und dem antriebsseitigen Deckblech 48 spielbehaftet, so dass es zu keiner erhöhten Reibung kommen kann. Durch den axialen Kontakt zwischen Führungsbuchse 51 und Abtriebsnabe 8 werden darüber hinaus axiale Kräfte direkt durchgeleitet, ohne negative Einflüsse auf den Torsionsschwingungsdämpfer 2 ausüben zu können.

Bei alternativen Ausführungsbeispielen kann eine axiale Abstützung auch über ein Zwischenblech des Torsionsschwingungsdämpfers 2 erfolgen, dessen Relativbewegungen bezüglich der Abtriebsnabe 8 geringer sind, so dass ein möglicher Verschleiß weiter verhindert werden kann.

Wenngleich in den Ausführungsbeispielen von Fig. 1 und Fig. 2 nicht gezeigt, können zusätzlich weitere Elemente in einem Anfahrelement gemäß einem Ausführungsbeispiel der Erfindung verbaut werden. Beispielsweise sind Reibeinrichtungen zur Dämpfung von Schwingungen integrierbar, die unter anderem zwischen dem antriebsseitigen Deckblech 48 und der Abtriebsnabe 8 angeordnet werden können. Alternative Anordnungen von solchen Reibeinrichtungen können beispielsweise zwischen dem antriebsseitigen Deckblech 48 und dem Ausgangsbauteil 42 des Torsionsschwingungsdämpfers 2 angeordnet werden, bzw. auch zwischen der Führungsbuchse 51 bzw. einem Kopfstück und dem antriebsseitigen Deckblech 48.

Ermöglicht auch durch die radiale Staffelung der ersten und zweiten mechanischen Verbindungen 32 und 44 ist der Turbinenradflansch 26 der Pumpenschale 18 so geformt, dass sich dieser in der axialen Richtung 12 unterhalb des Schwingungstilgers 6 erstreckt, bis dieser an den Turbinenradschaufeln 22 endet. Dies ermöglicht, in Verbindung mit der radialen Staffelung der ersten und zweiten mechanischen Verbindungen 32 und 44 die äußerst kompakte, in der axialen Richtung benachbarte Anordnung des Torsionsschwingungsdämpfers 2, des Schwingungstilgers 6 und des Turbinenrads, was zu einer weiteren Optimierung der Ausnutzung des zur Verfügung stehenden Bauraums führt.

Fig. 3 zeigt eine detaillierte Ansicht bzw. teilperspektivische Ansicht der Druckscheibe 34, die bei den Ausführungsbeispielen der Fig. 1 und 2 verwendet wird, um die Anbindung des Turbinenradflansches 26 mechanisch stabil zu gestalten. Die Druckscheibe 34 verfügt im Bereich der Köpfe der Vernietungen der ersten mechanischen Verbindung 32 über eine Mehrzahl von Ausnehmungen 52 bzw. Bohrungen zur Aufnahme der Nietköpfe. Bei alternativen Ausführungsbeispielen kann anstelle der Mehrzahl von Bohrungen auch eine umlaufende Nut verwenden werden. Der äußere Umfang 54a bzw. der innere Umfang 54b der Druckscheibe 34 kann als Anlagefläche für den Turbinenradflansch 26 und/oder die Abtriebsnabe 8 dienen. Bei alternativen Ausführungsbeispielen kann auch die Abtriebsnabe 8 über entsprechende Vertiefungen verfügen, so dass die Nieten axial vollständig in die Nabe eintauchen und somit eine ebene Auflagefläche für den Turbinenradflansch 26 der Turbine an der Abtriebsnabe 8 gebildet wird. Durch die Druckscheibe 34 können Axialkräfte abgestützt werden, ohne die Nietköpfe zu belasten. Bei alternativen Ausführungsbeispielen kann auch der bundförmige Mittelbereich der Nieten als Auflage für den Turbinenradflansch 26 dienen, um die Qualität der ersten mechanischen Verbindung 32 zwischen dem Turbinenradflansch 26 der Turbine und der Abtriebsnabe 8 zu verbessern.

Die Druckscheibe 34 selbst wird über die Abtriebsnabe 8 radial und/oder axial zentriert, wobei die Rückseite der Druckscheibe 34, das heißt dessen in der axialen Richtung 12 befindliches Ende entweder als Gleitlager ausgebildet ist oder als Anlagefläche für ein Axiallager dient. Ein solches Axiallager kann entweder als Wälzlager, beispielsweise als ein Axialnadellager, oder auch als separate Gleitscheibe (beispielsweise aus Kunststoff) ausgeführt sein. Weiterhin kann die Druckscheibe 34 hier der Übersichtlichkeit halber nicht dargestellte Nutungen für eine Ölführung aufweisen.

Die in Fig. 3 dargestellte Druckscheibe ist weiterhin gegen eine Relativverdrehung bezüglich des Turbinenradflansches 26 der Turbine gesichert. Dadurch können Relativbewegungen in der Umfangsrichtung nur an den dafür vorgesehenen und möglicherweise speziell designten Lagerstellen, also über eventuell verbaute Wälz- oder Gleitlager entstehen. Ein vorzeitiger Verschleiß an der Anlagefläche zur Turbine oder Nabe kann dadurch verhindert werden. Bei dem speziellen in Fig. 3 dargestellten Ausführungsbeispiel ist die Verdrehsicherung über stiftförmige Mitnahmeelemente 56a, b realisiert, die einstückig mit der Druckscheibe 34 ausgebildet sind in dazu korrespondierende Aussparungen bzw. Löcher in den Turbinenradflansch 26 eingreifen. Bei alternativen Ausführungsbeispielen kann die Verdrehsicherung selbstverständlich durch beliebige andere bekannte Maßnahmen implementiert sein.

Der Einsatz einer Druckscheibe 34 kann insbesondere bei einem Anfahrelement das, wie in den Fig. 1 und 2 gezeigt, einen Schwingungstilger 6 zwischen Torsionsschwingungsdämpfer 2 und Turbine aufweist, die sich dort an der Anbindung zwischen dem Turbinenradflansch 26 der Turbine und der Abtriebsnabe 8 ergebenden erhöhten Kräfte bzw. Momente aufnehmen. Insbesondere bei einer Ausgestaltung, wie sie in Fig. 1 und 2 dargestellt ist, bei der sich der Turbinenradflansch 26 nicht lediglich in der radialen Richtung 28 sondern auch in der axialen Richtung 12 erstreckt, kann durch die zusätzliche Entlastung der Nietstelle durch die Druckscheibe 34 die Stabilität und Langlebigkeit der Anordnung erheblich erhöht werden.

Ausführungsbeispiele der vorliegenden Erfindung können selbstverständlich nicht nur in Pkws, sondern auch in Lkws oder stationären Maschinen verwendet werden, bei denen das Verwenden eines Anfahrelements notwendig oder sinnvoll ist und die darüber hinaus von der Dämpfung von Drehschwingungen im Betrieb profitieren.

Die in der vorstehenden Beschreibung, den nachfolgenden Ansprüchen und in den Zeichnungen offenbarten Merkmale können sowohl einzeln als auch in beliebiger Kombination für die Verwirklichung der Erfindung in ihren verschiedenen Ausgestaltungen von Bedeutung sein.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele präsentiert wurden, beschränkt ist.

### Bezugszeichen

- 2: Torsionsschwingungsdämpfer
- 4: hydrodynamische Kopplungseinrichtung
- 6: Schwingungstilger
- 8: Abtriebsnabe
- 10: Rotationsachse
- 12: axiale Richtung
- 14: Wandlerdeckel
- 16: flexible Platte
- 18: Pumpenschale
- 20: Pumpenradschaufeln
- 22: Turbinenradschaufeln
- 24: Leitapparat
- 26: Turbinenradflansch
- 28: radiale Richtung
- 30: Befestigungsflansch
- 32: erste mechanische Verbindung
- 34: Druckscheibe
- 36: Wälzlager
- 37: Eingangselement
- 38: Wandlerüberbrückungskupplung
- 40a, b: elastische Elemente
- 42: Ausgangsbauteil
- 44: zweite mechanische Verbindung
- 46a, b: Tilgerträgerelement
- 47: Tilgergewicht
- 48: antriebsseitiges Deckblech
- 49: abtriebsseitiges Deckblech
- 50: Anlauffläche
- 51: Führungsbuchse
- 52: Ausnehmungen
- 53: Sicherungsbereich
- 54a: äußerer Umfang
- 54b: innerer Umfang
- 56a, b: Mitnahmeelemente

## Patentansprüche

1. Anfahrelement, umfassend:
einen mit einem Antrieb (16) koppelbaren Torsionsschwingungsdämpfer (2) mit einem antriebsseitigen Eingangselement (37), das gegen eine Wirkung einer ersten Federelementanordnung (40a) um eine Rotationsachse (10) bezüglich einer Zwischenübertragung (48, 49) drehbar ist, sowie mit einem gegen die Wirkung einer zweiten Federelementanordnung (40b) um die Rotationsachse (10) bezüglich der Zwischenübertragung (48, 49) drehbaren abtriebsseitigen Ausgangsbauteil (42), welches drehfest mit einer Abtriebsnabe (8) des Anfahrelements gekoppelt ist;
einer hydrodynamischen Kopplungseinrichtung (4) mit einem Turbinenrad (22) und einem mit diesem drehfesten Turbinenradflansch (26), wobei der Turbinenradflansch (26) über eine erste mechanische Verbindung (32) drehfest mit der Abtriebsnabe (8) gekoppelt ist;
einen Schwingungstilger (6) mit wenigstens einem zumindest ein Tilgergewicht (47) tragenden Tilgerträgerelement (46a; 46a, 46b), welches über eine zweite mechanische Verbindung (44) drehfest mit der Zwischenübertragung (48, 49) gekoppelt ist,
**dadurch gekennzeichnet, dass** sich das Tilgerträgerelement (46a; 46a, 46b) entgegen einer auf der Rotationsachse (10) senkrecht stehenden radialen Richtung (28) bis zu der Abtriebsnabe (8) erstreckt um sich auf dieser abzustützen, wobei sich eine axiale Ausdehnung der ersten mechanischen Verbindung (32) mit einer axialen Ausdehnung der zweiten mechanischen Verbindung (44) wenigstens teilweise überlappt.

2. Anfahrelement nach Anspruch 1, bei dem der Schwingungstilger (6) in einer zur Rotationsachse (10) parallelen axialen Richtung (12) zwischen dem Torsionsschwingungsdämpfer (2) und dem Turbinenrad (22) der hydrodynamischen Kopplungseinrichtung (4) angeordnet ist.

3. Anfahrelement nach Anspruch 1 oder 2, wobei sich die erste mechanische Verbindung (32) radial weiter innen befindet als die zweite mechanische Verbindung (44).

4. Anfahrelement nach einem der vorhergehenden Ansprüche, bei dem das Ausgangsbauteil (42) des Torsionsschwingungsdämpfers (2) mit der Abtriebsnabe (8) über die erste mechanische Verbindung (32) gekoppelt ist.

5. Anfahrelement nach einem der vorhergehenden Ansprüche, bei dem die Zwischenübertragung (48, 49) zumindest ein antriebsseitiges Deckblech (48) umfasst, das sich entgegen der radialen Richtung (28) mit einem axialen Spiel bis in einen Sicherungsbereich (53) zwischen der Abtriebsnabe (8) und einer zu der Abtriebsnabe (8) entgegen der axialen Richtung benachbarten Führungsbuchse (51) erstreckt, sodass eine Bewegung des antriebsseitigen Deckblechs (48) in oder entgegen der axialen Richtung (12) gehemmt wird.

6. Anfahrelement nach Anspruch 5, bei dem sich an der Abtriebsnabe (8) im Sicherungsbereich (53) eine Anlauffläche (50) parallel zu dem antriebsseitigen Deckblech (48) erstreckt, die eine Lagerstelle für das antriebsseitige Deckblech (48) bildet.

7. Anfahrelement nach Anspruch 5 oder 6, bei dem die Zwischenübertragung (48, 49) ferner ein abtriebsseitiges Deckblech (49) umfasst, das auf der dem Ausgangsbauteil (42) axial gegenüberliegenden Seite des antriebsseitigen Deckblechs (48) angeordnet und mit diesem verbunden ist, wobei sich das abtriebsseitige Deckblech (49) entgegen der radialen Richtung (28) bis zu der Abtriebsnabe (8) erstreckt, um sich an dieser radial abzustützen.

8. Anfahrelement nach einem der vorhergehenden Ansprüche, bei dem die erste mechanische Verbindung (32) und die zweite mechanische Verbindung (44) radial innerhalb der zweiten Federelementanordnung (40b) angeordnet sind.

9. Anfahrelement nach einem der vorhergehenden Ansprüche, bei dem die Abtriebsnabe (8) einen sich in der radialen Richtung (28) erstreckenden Befestigungsflansch (30) aufweist, mit dem der Turbinenradflansch (26) des Turbinenrads (22) über die erste mechanische Verbindung (32) verbunden ist.

10. Anfahrelement nach Anspruch 9, bei dem an einer dem Befestigungsflansch (30) in der axialen Richtung (12) gegenüberliegenden Seite des Turbinenradflansches (26) des Turbinenrads (22) eine Druckscheibe (34) angeordnet ist, die sich entgegen der radialen Richtung (28) unmittelbar bis zu der Abtriebsnabe (8) erstreckt, um sich an dieser abzustützen.

11. Anfahrelement nach Anspruch 10, bei dem zwischen der Druckscheibe (34) und dem Turbinenradflansch (26) ein axiales Spiel vorgesehen ist.

12. Anfahrelement nach Anspruch 10 oder 11, bei dem die Druckscheibe (34) auf der von dem Turbinenradflansch (26) abgewandten Seite eine Anlagefläche für ein Axiallager (36) aufweist, die ausgebildet ist, um als Laufbahn für ein Wälzlager (34) oder als Gleitfläche eines Gleitlagers zu dienen.

13. Anfahrelement nach einem der Ansprüche 10 bis 12, bei dem die Druckscheibe (34) auf der dem Turbinenradflansch (26) zugewandten Seite eine umlaufende Nut oder eine Mehrzahl von Ausnehmungen (52) zur Aufnahme von Niet- Schraubköpfen aufweist.

14. Anfahrelement nach einem der Ansprüche 10 bis 13, bei dem die Druckscheibe (34) gegen ein Verdrehen bezüglich der Abtriebsnabe und/oder der dem Turbinenradflansch gesichert ist.

15. Anfahrelement nach einem der vorhergehenden Ansprüche, bei dem sich der Turbinenradflansch (26) des Turbinenrades (22) in der axialen Richtung (12) im Wesentlichen radial innerhalb des Schwingungstilgers (6) bis zu Turbinenradschaufeln des Turbinenrades (22) erstreckt, welche in der axialen Richtung (12) benachbart zu dem Schwingungstilger (6) angeordnet sind.

16. Anfahrelement nach Anspruch 1 und 7, **dadurch gekennzeichnet, dass** entweder das wenigstens eine Tilgerträgerelement (46a; 46a, 46b) oder das abtriebsseitige Deckblech (49) der Zwischenübertragung (48, 49) gegenüber der Abtriebsnabe (8) zentriert sind.

## Claims

1. Launch element, comprising:
a torsional vibration damper (2) which is couplable to a drive input (16) and which has a drive-input-side input element (37) which is rotatable, counter to an action of a first spring element arrangement (40a),
about an axis of rotation (10) relative to an intermediate transmission means (48, 49), and having a drive-output-side output component (42) which is rotatable, counter to the action of a second spring element arrangement (40b), about the axis of rotation (10) relative to the intermediate transmission means (48, 49), which output component is coupled rotationally conjointly to a drive-output hub (8) of the launch element;
a hydrodynamic coupling device (4) with a turbine wheel (22) and with a turbine wheel flange (26) rotationally conjoint with said turbine wheel, wherein the turbine wheel flange (26) is coupled rotationally conjointly to the drive-output hub (8) by means of a first mechanical connection (32);
a vibration absorber (6) with at least one absorber carrier element (46a; 46a, 46b) which bears at least one absorber weight (47) and which is coupled rotationally conjointly by means of a second mechanical connection (44) to the intermediate transmission means (48, 49),
**characterized in that** the absorber carrier element (46a; 46a, 46b) extends, counter to a radial direction (28) perpendicular to the axis of rotation (10), as far as the drive-output hub (8) in order to be supported on the latter, wherein an axial extent of the first mechanical connection (32) at least partially overlaps an axial extent of the second mechanical connection (44) .

2. Launch element according to Claim 1, in which the vibration absorber (6) is arranged, in an axial direction (12) parallel to the axis of rotation (10), between the torsional vibration damper (2) and the turbine wheel (22) of the hydrodynamic coupling device (4) .

3. Launch element according to Claim 1 or 2, wherein the first mechanical connection (32) is situated radially further to the inside than the second mechanical connection (44).

4. Launch element according to one of the preceding claims, in which the output component (42) of the torsional vibration damper (2) is coupled to the drive-output hub (8) by means of the first mechanical connection (32).

5. Launch element according to one of the preceding claims, in which the intermediate transmission means (48, 49) comprises at least one drive-input-side cover plate (48) which extends counter to the radial direction (28) with an axial degree of play as far as into a securing region (53) between the drive-output hub (8) and a guide bushing (51) which is adjacent to the drive-output hub (8) counter to the axial direction, such that a movement of the drive-input-side cover plate (48) in or counter to the axial direction (12) is impeded.

6. Launch element according to Claim 5, in which, on the drive-output hub (8), in the securing region (53), an abutment surface (50) extends parallel to the drive-input-side cover plate (48), which abutment surface forms a bearing point for the drive-input-side cover plate (48).

7. Launch element according to Claim 5 or 6, in which the intermediate transmission means (48, 49) furthermore comprises a drive-output-side cover plate (49) which is arranged on the side of the drive-input-side cover plate (48) situated axially opposite the output component (42) and which is connected to said drive-input-side cover plate, wherein the drive-output-side cover plate (49) extends counter to the radial direction (28) as far as the drive-output hub (8) in order to be supported radially on the latter.

8. Launch element according to one of the preceding claims, in which the first mechanical connection (32) and the second mechanical connection (44) are arranged radially within the second spring element arrangement (40b).

9. Launch element according to one of the preceding claims, in which the drive-output hub (8) has a fastening flange (30) which extends in the radial direction (28) and to which the turbine wheel flange (26) of the turbine wheel (22) is connected by means of the first mechanical connection (32).

10. Launch element according to Claim 9, in which a pressure disc (34) is arranged on a side, situated opposite the fastening flange (30) in the axial direction (12), of the turbine wheel flange (26) of the turbine wheel (22), which pressure disc extends counter to the radial direction (28) directly as far as the drive-output hub (8) in order to be supported on the latter.

11. Launch element according to Claim 10, in which an axial degree of play is provided between the pressure disc (34) and the turbine wheel flange (26).

12. Launch element according to Claim 10 or 11, in which the pressure disc (34) has, on the side averted from the turbine wheel flange (26), a contact surface for an axial bearing (36), which contact surface is designed to serve as a raceway for a rolling bearing (34) or as a sliding surface of a plain bearing.

13. Launch element according to one of Claims 10 to 12, in which the pressure disc (34) has, on the side facing toward the turbine wheel flange (26), an encircling groove or a multiplicity of recesses (52) for receiving rivet bolt heads.

14. Launch element according to one of Claims 10 to 13, in which the pressure disc (34) is secured against rotation relative to the drive-output hub and/or the turbine wheel flange.

15. Launch element according to one of the preceding claims, in which the turbine wheel flange (26) of the turbine wheel (22) extends in the axial direction (12) substantially radially within the vibration absorber (6) as far as turbine wheel blades of the turbine wheel (22), which are arranged in the axial direction (12) adjacent to the vibration absorber (6).

16. Launch element according to Claim 1 and 7, **characterized in that** either the at least one absorber carrier element (46a; 46a, 46b) or the drive-output-side cover plate (49) of the intermediate transmission means (48, 49) are centred relative to the drive-output hub (8).

## Revendications

1. Elément de démarrage, comprenant:
un amortisseur d'oscillations de torsion (2) pouvant être couplé à un entraînement (16) avec un élément d'entrée côté entraînement (37), qui peut tourner autour d'un axe de rotation (10) par rapport à une transmission intermédiaire (48, 49) contre une action d'un premier agencement d'éléments de ressort (40a), ainsi qu'avec un composant de sortie côté sortie (42), qui peut tourner autour de l'axe de rotation (10) par rapport à la transmission intermédiaire (48, 49) contre l'action d'un deuxième agencement d'éléments de ressort (40b), et qui est couplé de façon calée en rotation à un moyeu de sortie (8) de l'élément de démarrage;
un dispositif d'accouplement hydrodynamique (4) avec une roue de turbine (22) et une bride de roue de turbine (26) solidaire en rotation de celle-ci, dans lequel la bride de roue de turbine (26) est couplée à un moyeu de sortie (8) de façon solidaire en rotation au moyen d'une première liaison mécanique (32);
un amortisseur d'oscillations (6) avec au moins un élément de support d'amortisseur (46a; 46a, 46b) portant au moins un poids d'amortisseur (47), qui est couplé à la transmission intermédiaire (48, 49) de façon solidaire en rotation au moyen d'une deuxième liaison mécanique (44),
**caractérisé en ce que** l'élément de support d'amortisseur (46a; 46a, 46b) s'étend à l'inverse d'une direction radiale (28) orientée perpendiculairement à l'axe de rotation (10) jusqu'à un moyeu de sortie (8) afin de s'appuyer sur celui-ci, dans lequel une extension axiale de la première liaison mécanique (32) chevauche au moins partiellement une extension axiale de la deuxième liaison mécanique (44).

2. Elément de démarrage selon la revendication 1, dans lequel l'amortisseur d'oscillations (6) est disposé dans une direction axiale (12) parallèle à l'axe de rotation (10) entre l'amortisseur d'oscillations de torsion (2) et la roue de turbine (22) du dispositif d'accouplement hydrodynamique (4).

3. Elément de démarrage selon la revendication 1 ou 2, dans lequel la première liaison mécanique (32) se trouve radialement plus loin à l'intérieur que la deuxième liaison mécanique (44).

4. Elément de démarrage selon l'une quelconque des revendications précédentes, dans lequel le composant de sortie (42) de l'amortisseur d'oscillations de torsion (2) est couplé à la sortie (8) au moyen de la première liaison mécanique (32).

5. Elément de démarrage selon l'une quelconque des revendications précédentes, dans lequel la transmission intermédiaire (48, 49) comprend au moins une tôle de couverture côté entraînement (48), qui s'étend à l'inverse de la direction radiale (28) avec un jeu axial jusque dans une région de fixation (53) entre le moyeu de sortie (8) et une douille de guidage (51) voisine du moyeu de sortie (8) à l'inverse de la direction axiale, de telle manière qu'un déplacement de la tôle de couverture côté entraînement (48) dans la direction axiale (12) ou inversement soit empêché.

6. Elément de démarrage selon la revendication 5, dans lequel une face d'engagement (50) s'étend sur le moyeu de sortie (8) dans la région de fixation (53) parallèlement à la tôle de couverture côté entraînement (48), et forme un point d'appui pour la tôle de couverture côté entraînement (48).

7. Elément de démarrage selon la revendication 5 ou 6, dans lequel la transmission intermédiaire (48, 49) comprend en outre une tôle de couverture côté sortie (49), qui est disposée sur le côté de la tôle de couverture côté entraînement (48) axialement opposé au composant de sortie (42) et est assemblée à celle-ci, dans lequel la tôle de couverture côté sortie (49) s'étend à l'inverse de la direction radiale (28) jusqu'au moyeu de sortie (8), pour prendre appui radialement sur celui-ci.

8. Elément de démarrage selon l'une quelconque des revendications précédentes, dans lequel la première liaison mécanique (32) et la deuxième liaison mécanique (44) sont disposées radialement à l'intérieur du deuxième agencement d'éléments de ressort (40b).

9. Elément de démarrage selon l'une quelconque des revendications précédentes, dans lequel le moyeu de sortie (8) présente une bride de fixation (30) s'étendant dans la direction radiale (28), à laquelle la bride de roue de turbine (26) de la roue de turbine (22) est assemblée par la première liaison mécanique (32) .

10. Elément de démarrage selon la revendication 9, dans lequel un disque de pression (34) est disposé sur un côté de la bride de roue de turbine (26) de la roue de turbine (22) opposé dans la direction axiale (12) à la bride de fixation (30), disque qui s'étend à l'inverse de la direction radiale (28) directement jusqu'au moyeu de sortie (8), pour prendre appui sur celui-ci.

11. Elément de démarrage selon la revendication 10, dans lequel il est prévu un jeu axial entre le disque de pression (34) et la bride de roue de turbine (26).

12. Elément de démarrage selon la revendication 10 ou 11, dans lequel le disque de pression (34) présente sur le côté situé à l'opposé de la bride de roue de turbine (26) une face d'appui pour un palier axial (36), qui est réalisée de façon à servir de piste de roulement pour un palier à roulement (34) ou de face de glissement d'un palier lisse.

13. Elément de démarrage selon l'une quelconque des revendications 10 à 12, dans lequel le disque de pression (34) présente sur le côté tourné vers la bride de roue de turbine (26) une rainure périphérique ou une multiplicité d'évidements (52) destinés à recevoir des têtes de rivets filetés.

14. Elément de démarrage selon l'une quelconque des revendications 10 à 13, dans lequel le disque de pression (34) est bloqué contre une rotation par rapport au moyeu de sortie et/ou à la bride de roue de turbine.

15. Elément de démarrage selon l'une quelconque des revendications précédentes, dans lequel la bride de roue de turbine (26) de la roue de turbine (22) s'étend essentiellement radialement dans la direction axiale (12) à l'intérieur de l'amortisseur d'oscillations (6) jusqu'à des aubes de roue de turbine de la roue de turbine (22), qui sont disposées dans la direction axiale (12) à proximité de l'amortisseur d'oscillations (6) .

16. Elément de démarrage selon la revendication 1 et 7, **caractérisé en ce que** soit ledit au moins un élément de support d'amortisseur (46a; 46a, 46b) soit la tôle de couverture côté sortie (49) de la transmission intermédiaire (48, 49) sont centrés par rapport au moyeu de sortie (8).
